## Europäisches Patentamt
## European Patent Office
## Office européen des brevets

(19)

(11) Veröffentlichungsnummer: **0 113 014**
**B1**

(12) **EUROPÄISCHE PATENTSCHRIFT**

(45) Veröffentlichungstag der Patentschrift:
**01.03.89**

(51) Int. Cl.⁴: **F 16 H 25/22, F 16 C 31/04**

(21) Anmeldenummer: **83111600.9**

(22) Anmeldetag: **21.11.83**

(54) **Kugelgewindetrieb.**

(30) Priorität: **02.12.82 DE 3244508**

(43) Veröffentlichungstag der Anmeldung:
**11.07.84 Patentblatt 84/28**

(45) Bekanntmachung des Hinweises auf die Patenterteilung:
**01.03.89 Patentblatt 89/9**

(84) Benannte Vertragsstaaten:
**AT BE CH DE FR GB IT LI SE**

(56) Entgegenhaltungen:
**DE-A- 3 100 349**
**DE-B- 2 149 392**
**DE-C- 2 805 141**
**US-A- 2 322 000**
**US-A- 2 486 055**
**US-A- 3 942 846**

(73) Patentinhaber: **A. Mannesmann Maschinenfabrik GmbH. & Co. KG, D-5630 Remscheid-Bliedinghausen (DE)**

(72) Erfinder: **Klimke, Wolfgang, Dr.-Ing., Talsperrenstrasse 8, D-5650 Solingen 25 (DE)**

(74) Vertreter: **Mentzel, Norbert, Dipl.-Phys. et al, Patentanwälte Dipl.-Phys. Buse Dipl.-Phys. Mentzel Dipl.-Ing. Ludewig Unterdörnen 114, D-5600 Wuppertal 2 (DE)**

**Beschreibung**

Die Erfindung betrifft einen Kugelgewindetrieb mit den Merkmalen gemäß Oberbegriff von Anspruch 1.

Diese aus der DE-PS-2 805 141 bekannten Kugelgewindetriebe können mit einer Einzelgangumlenkung oder einer Gesamtumlenkung versehen sein. Bei der Gesamtumlenkung werden die am Ende des mehrfach umlaufenden, schraubengangförmigen Kugellaufkanals ankommenden Kugeln durch einen Überführungskanal zum Anfang des Kugellaufkanals zurückgeführt. Es ist somit nur ein einziger mehrfacher Kugelumlauf vorgesehen. Bei der Einzelgangumlenkung sind mehrere Kugelumläufe vorgesehen, da der mehrfach umlaufende Kugellaufkanal in mehrere Abschnitte unterteilt ist und jeder Abschnitt des Kugellaufkanals jeweils nur einen Umlauf erfaßt und am Ende des Umlaufes die Kugeln mit einem Rückführkörper zum Anfang des Umlaufes des Kugellaufkanals zurückgeführt werden.

An der Übergangsstelle zwischen dem Kugellaufkanal und dem Überführungskanal ist eine von einer vorspringenden Kante gebildete Querschnittsverengung des Kanals vorgesehen, da die Kugeln sich beim bestimmungsgemäßen Gebrauch des Kugelgewindetriebs im Kugellaufkanal abwälzen und dabei gegen die eine einen größeren Radius als die Kugeln aufweisende Seitenflanke der Spindelnut und gegen die gegenüberliegende, einen größeren Radius als die Kugeln aufweisende Seitenflanke der Mutternut kraftschlüssig anliegen, während der Überführungskanal eine den Durchmesser der Kugeln übersteigende lichte Weite aufweist. Dies bedeutet, daß die im Überführungskanal vorhandenen Kugeln nicht von alleine in den Kugellaufkanal einlaufen, sondern von den nachfolgenden Kugeln in den Kugellaufkanal eingedrückt werden müssen. Bei diesem Eindrücken der vordersten Kugel aus dem Überführungskanal in den Kugellaufkanal wird die Kugel etwas elastisch zusammengedrückt. Da dieses Zusammendrücken an der vorspringenden Kante erfolgt, ist hierzu ein erhöhtes Drehmoment erforderlich, zumal die Zusammenpressung der Kugel über einen kleinen Drehwinkel erfolgt. Das Eindrücken der Kugel aus dem Überführungskanal in den Kugellaufkanal erfolgt somit ruckhaft.

Um ein solches ruckhaftes Eindrücken der Kugel aus dem Überführungskanal in den Kugellaufkanal zu vermeiden, wird bei den bekannten Kugelgewindetrieben die vorstehende Kante am Übergang zwischen dem engeren Kugellaufkanal und dem weiteren Überführungskanal üblicherweise von Hand zu einer konisch verlaufenden Fläche abgeschliffen. Die Mutternut wird somit an der Übergangsstelle zum Überführungskanal konisch erweitert, und zwar bis die lichte Weite der Mutternut stufenlos in die lichte Weite des entsprechenden Teils am Überführungskanal übergeht. Dieses Schleifen ist zeitaufwendig und muß sorgfältig durchgeführt werden, um Kanten oder zu steile Einlaufschrägen zu vermeiden. Die konische Erweiterung am Einlaufende des Kugellaufkanals soll dabei derart ausgebildet sein, daß der wirksame Einlaufwinkel der Einlaufschräge maximal dem Grenzeinlaufwinkel entspricht. Dadurch wird die aus dem Überführungskanal in den Kugellaufkanal einzuführende Kugel sanft durch die gegenseitige Bewegung von Gewindespindel und Mutternkörper eingerollt.

Der Erfindung liegt die Aufgabe zugrunde, einen Kugelgewindetrieb der eingangs erläuterten Art weiter zu entwickeln, wobei am Eingang des Kugellaufkanals in einfach herzustellender Weise eine Einlaufschräge für das selbsttätige Einlaufen der Kugeln in den Kugellaufkanal vorgesehen ist.

Diese Aufgabe ist erfindungsgemäß durch die im Anspruch 1 enthaltenen Merkmale gelöst. Dadurch wird in einfacher Weise ein sanfter Kugeleinlauf am vorderen Ende des Kugellaufkanals erzielt, da die vorspringende Kante am Beginn des engeren Kugellaufkanals nunmehr geneigt zur Kugellaufrichtung verläuft. Die geneigt zur Kugellaufrichtung verlaufende Einlaufkante beginnt dabei an einer Stelle der gegen die Kugel zur Anlage kommenden Seitenflanke der Mutternut, die im seitlichen Abstand zur Kugel angeordnet ist, da der Radius der Seitenflanke der Mutternut größer ist als der Radius der Kugel. In ihrem weiteren Verlauf kommt die Einlaufkante an eine Stelle, an der sie gegen die Kugel zur Anlage kommt. Schließlich kommt die Einlaufkante dann bis zu der Stelle an der Seitenflanke der Mutternut, an der die Kugel mit ihrer ganzen Anlagefläche gegen die Seitenflanke der Nut anliegt. An dieser Stelle ist dann der Einlauf beendet.

Im Mutternkörper kann zur Aufnahme des Rückführkörpers eine Ausnehmung vorgesehen sein, durch die zur Bildung der Einlaufkante Stirnflächen an zwischen den Mutternuten stehenden Rippen gebildet und mit einem Winkel Alpha geneigt zur Kugellaufrichtung angeordnet sind. Dadurch wird in einfacher Weise die Einlaufkante von der Kante zwischen der Seitenflanke der Mutternut und der geneigt verlaufenden Stirnfläche der zwischen den Nuten stehenden Rippe gebildet. Bei der Fertigung kann dabei in besonders einfacher Weise die Stirnfläche der Rippe mit der entsprechenden Neigung versehen werden. Die Neigung der Stirnfläche kann dabei vor dem Härten des Mutternkörpers durch Fräsen, Hobeln, Schleifen od. dgl. erstellt werden.

Die von der Stirnfläche der Rippe und der zur Anlage an die Kugel kommenden Seitenflanke gebildete Einlaufkante kann eine räumliche Kurve in bezug auf die Kugellaufbahn bilden und zur Kugellaufrichtung einen räumlichen Winkel einschließen, dessen Maximalwert höchstens dem Grenzeinlaufwinkel entspricht. Dadurch wird in einfacher Weise ein ruckfreies, sanftes Einlaufen der Kugeln erzielt.

Die Ausnehmung kann die gesamte Breite des Mutternkörpers erfassen und alle dadurch gebildeten Stirnflächen an den Rippen geneigt zur Kugellaufrichtung verlaufen. Dadurch kann in einfacher Weise bei der Herstellung der Mutternkörper lediglich mit einer Ausnehmung für den Rückführkörper versehen werden. An den Längskanten der Ausnehmung können dabei die durch die Ausnehmung gebildeten Stirnflächen der Rippen in besonders einfacher Weise mit der erforderlichen Neigung versehen werden.

Die von den Stirnflächen der Rippen gebildeten Einlaufkanten können zueinander in Achsrichtung fluchtend angeordnet werden. Dadurch können in einfacher Weise die geneigt zur Kugellaufrichtung verlaufenden Stirnflächen zusammen in einem Arbeitsgang erstellt werden.

Die Stirnflächen der Rippen können an beiden Längsseiten der die gesamte Breite des Mutternkörpers erfassenden Ausnehmung für den Rückführkörper geneigt zur Kugellaufrichtung verlaufen. Dadurch sind in einfacher Weise die Kugellaufkanäle an beiden Enden mit den Einlaufkanten versehen, so daß der Kugelgewindetrieb in beiden Drehrichtungen betätigbar ist, ohne den ruckfreien, sanften Kugeleinlauf zu beeinträchtigen.

Die Stirnflächen der Rippen können in Einlaufrichtung vom Rippenfuß zur Rippenspitze kontinuierlich ansteigen. Die geneigt zur Kugellaufrichtung verlaufenden Stirnflächen der Rippen sind somit in einfacher Weise eben ausgebildet und steigen vom Rippenfuß zur Rippenspitze an.

Darüber hinaus ist es auch möglich, daß die Stirnflächen der Rippen in Einlaufrichtung von der Rippenspitze zum Rippenfuß kontinuierlich abfallen. Auch hiermit ist in einfacher Weise ein ruckfreier, sanfter Kugeleinlauf gewährleistet.

Mit dem die gesamte Breite des Mutternkörpers erfassenden Rückführkörper kann eine Einzelgangumlenkung erfolgen, wobei jeweils am Anfang und Ende der Kugellaufkanäle die Einlaufkanten vorgesehen sind. Dadurch wird in einfacher Weise eine mehrere Umläufe aufweisende Einzelgangumlenkung geschaffen, bei der an jedem Umlauf die Kugeln sanft und ruckfrei in den Kugellaufkanal einlaufen.

Der Rückführkörper kann einen etwa halbkreisförmigen Querschnitt aufweisen und in der einen entsprechenden Querschnitt aufweisenden, die gesamte Breite des Mutternkörpers erfassenden Ausnehmung eingesetzt sein. Dadurch ist einfacher Weise der Rückführkörper in tangentialer Richtung formschlüssig in der Ausnehmung des Mutternkörpers eingesetzt, so daß weitere Befestigungsmittel eingespart werden können.

Der Rückführkörper kann an seiner der Spindel zugekehrten Seite rippenförmige Vorsprünge aufweisen, die formschlüssig in die Spindelnut eingreifen. Dadurch ist in einfacher Weise der Rückführkörper gegen seitliche Verschiebung gesichert in der die gesamte Breite des Mutternkörpers erfassenden Ausnehmung eingesetzt, so daß weitere Befestigungsmittel entbehrlich sind. Die rippenförmigen Vorsprünge bilden dabei zugleich Zungen, mit denen ein Herausheben der Kugeln aus dem jeweiligen Kugellaufkanal bewirkt wird.

Der Rückführkörper kann an seiner der Spindel abgekehrten Seite die Überführungskanäle in Form von Nuten aufweisen, die gegen die Wand der Ausnehmung im Mutternkörper gerichtet sind. Dadurch sind in einfacher Weise die Überführungskanäle in Form von Nuten im Rückführkörper angeordnet, wobei die Nuten von der Wand der Ausnehmung im Mutternkörper abgedeckt sind und somit geschlossene Überführungskanäle bilden.

Zwischen den Nuten können rippenförmige Vorsprünge gebildet sein, die mit ihren freien Flächen gegen die Wand der Ausnehmung im Mutternkörper anliegen. Die die Nuten bildenden rippenförmigen Vorsprünge bilden somit in einfacher Weise zusammen mit der Wand der Ausnehmung die geschlossenen Überführungskanäle.

Die von den Nuten gebildeten Überführungskanäle können jeweils die benachbarten Enden eines Ganges des Kugellaufkanals miteinander verbinden. Somit wird in einfacher Weise eine Einzelgangumlenkung geschaffen.

Die rippenförmigen Vorsprünge können im mittleren Bereich etwas abgeflacht sein. Dadurch wird, insbesondere bei einer S-förmigen Ausbildung der zwischen den rippenförmigen Vorsprüngen liegenden Nuten, eine zu dünne Ausbildung der rippenförmigen Vorsprünge verhindert, da diese in diesem Bereich durch die Abflachung einfach entfernt sind.

Auf der Zeichnung ist die Erfindung in mehreren Ausführungsbeispielen dargestellt, und zwar zeigen:

Fig. 1 einen erfindungsgemäßen Kugelgewindetrieb im Längsschnitt,

Fig. 2 den Kugelgewindetrieb in Stirnansicht,

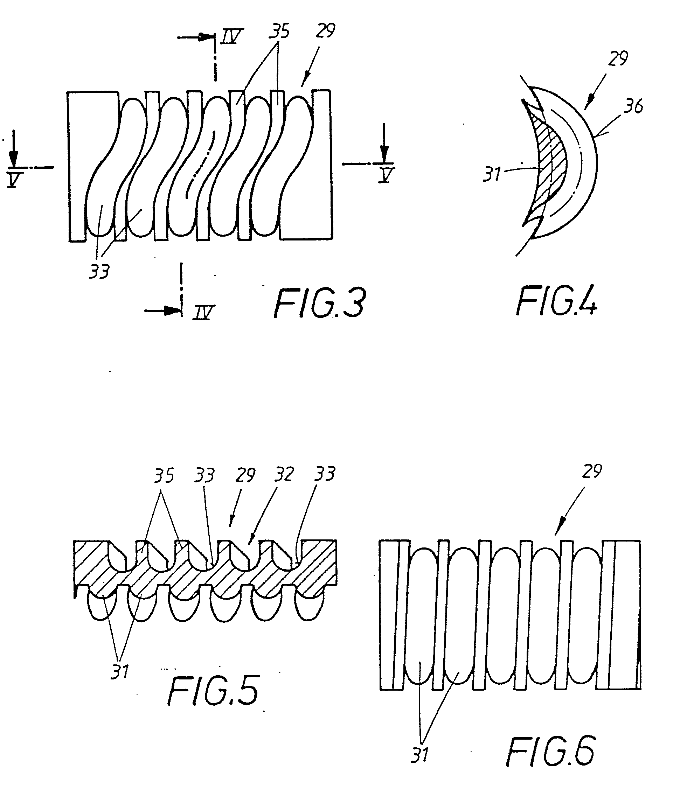

Fig. 3 den für die Umlenkung der Kugeln erforderlichen Rückführkörper in Draufsicht,

Fig. 4 einen Schnitt nach der Linie IV–IV der Fig. 3,

Fig. 5 einen Schnitt nach der Linie V–V der Fig. 3,

Fig. 6 den Rückführkörper in Unteransicht,

Fig. 7 den Mutternkörper des Kugelgewindetriebes in Seitenansicht in einem größeren Maßstab,

Fig. 8 einen Schnitt nach der Linie VIII–VIII der Fig. 7,

Fig. 9 einen Schnitt nach der Linie IX–IX der Fig. 7 in einer schaubildlichen Darstellung, größerem Maßstab und teilweise abgebrochen,

Fig. 10 eine der Fig. 9 entsprechende Darstellung einer zweiten Ausführungsform,

Fig. 11 eine den Fig. 9 und 10 entsprechende Darstellung des Standes der Technik,

Fig. 12 einen Schnitt nach der Linie XII–XII der Fig. 2 in einem größeren Maßstab, teilweise weggebrochen,

Fig. 13 eine schematische, schaubildliche Darstellung der Einlaufkante,

Fig. 14 einen Schnitt nach der Linie XIV–XIV der Fig. 13,

Fig. 15 einen Schnitt nach der Linie XV–XV der Fig. 13,

Fig. 16 einen Schnitt nach der Linie XVI–XVI der Fig. 13 und

Fig. 17 einen Schnitt nach der Linie XVII–XVII der Fig. 13.

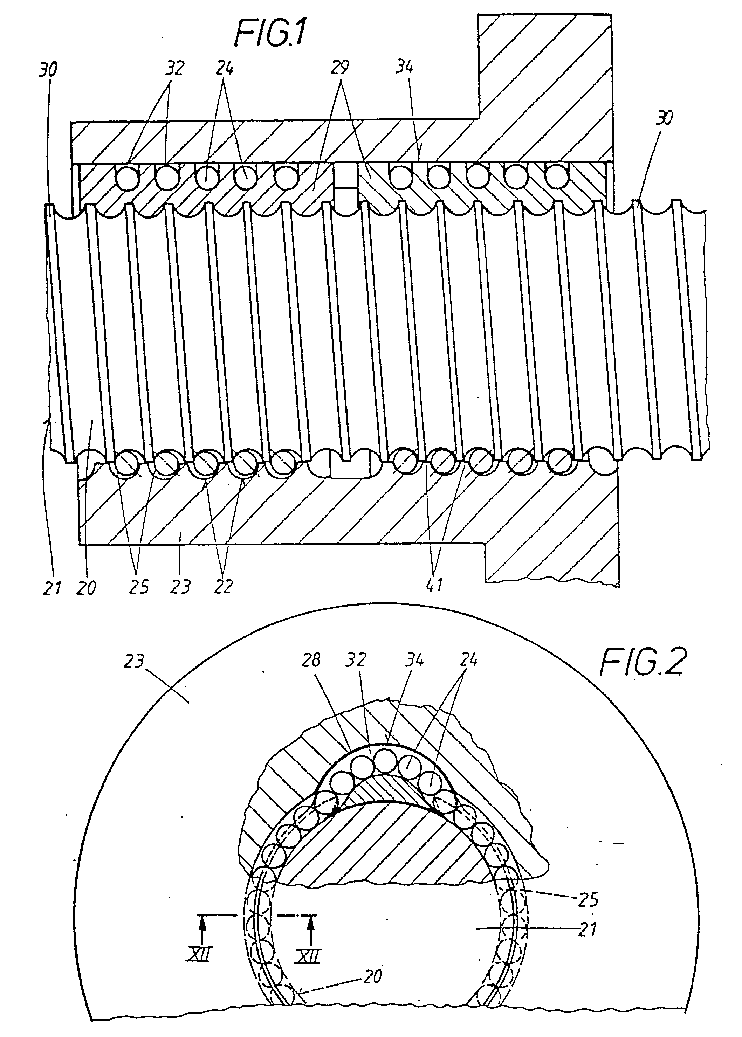

Der auf der Zeichnung dargestellte Kugelgewindetrieb besteht aus einer eine schraubengangförmige Spindelnut 20 aufweisenden Spindel 21 und einem ebenfalls eine schraubengangförmige Mutternut 22 aufweisenden Mutternkörper 23. Die beiden Nuten 20, 22 ergänzen sich zu einem eine Anzahl von endlos umlaufenden Kugeln 24 aufnehmenden schraubengangförmigen Kugellaufkanal 25. Beim bestimmungsgemäßen Gebrauch des Kugelgewindetriebes wälzen sich die Kugeln im Kugellaufkanal 25 ab und liegen dabei gegen die eine einen größeren Radius als die Kugeln 24 aufweisende Seitenflanke 26 der Spindelnut 20 und gegen die gegenüberliegende, ebenfalls einen größeren Radius als die Kugeln 24 aufweisende Seitenflanke 27 der Mutternut 22 kraftschlüssig an. Die Berührungslinien der Kugeln 24 an den Seitenflanken 26 und 27 der Nuten 20 und 22 der Spindel 21 und des Mutternkörpers 23 verlaufen dabei in etwa unter einem Winkel von 45° zur Längsmittellinie der Spindel 21. Wie insbesondere aus der Fig. 1 ersichtlich, ist im Mutternkörper 23 sie schraubengangförmige Nut 22 etwa in der Mitte unterbrochen, so daß die schraubengangförmige Mutternut 22 in zwei Teile unterteilt ist. Der zweite Teil der Mutternut 22 ist dabei nicht als Verlängerung des ersten Teiles der Mutternut 22 in dem Mutternkörper 23 eingebracht worden. Zwischen den beiden Teilen der Mutternut 22 ist ein Steigungssprung eingearbeitet, so daß der erste Teil der Mutternut 22 nicht mit dem zweiten Teil der Mutternut 22 fluchtet. Dadurch wird in einfacher Weise erreicht, daß die Kugeln 24, wie aus der Fig. 1 ersichtlich, beim linken Teil der Mutternut 22 gegen deren rechte Seitenflanke 27 und beim rechten Teil der Mutternut 22 gegen deren linke Seitenflanke 27 kraftschlüssig zur Anlage kommen. Die Kugeln 24 liegen dabei mit Vorspannung gegen die zugehörigen Seitenflanken 27 an, so daß eine spielfreie Lagerung der Spindel 21 im Mutternkörper 23 erzielt wird.

Dem Kugellaufkanal 25 ist in einer Ausnehmung 28 ein Rückführkörper 29 zum Überführen der am Ende des schraubengangförmigen Kugellaufkanals 25 durch das Abwälzen ankommender Kugeln 24 über die die schraubengangförmige Spindelnut 20 begrenzende schraubengangförmige Rippe 30 der Spindel 21 hinweg zum Anfang des schraubengangförmigen Kugellaufkanals 25 zugeordnet. Wie insbesondere aus der Fig. 1 ersichtlich, sind dabei dem Kugelgewindetrieb zehn Kugelumläufe zugeordnet, wobei jeder Kugelumlauf die Spindel 21 einmal umfaßt. Der Rückführkörper 29 ist dabei entsprechend der Unterteilung der schraubengangförmigen Mutternut 20 unterteilt. Der die Einzelgangumlenkung bewirkende Rückführkörper 29 weist, wie insbesondere aus der Fig. 4 ersichtlich, einen etwa halbkreisförmigen Querschnitt auf und ist in der einen entsprechenden Querschnitt aufweisenden, die gesamte Breite des Mutternkörpers 23 erfassenden Ausnehmung 28 in tangentialer Richtung formschlüssig eingesetzt, wobei besondere Befestigungsmittel entbehrlich sind.

Der die Einzelgangumlenkung bewirkende Rückführkörper 29 weist an seiner der Spindel 21 zugekehrten Seite rippenförmige Vorsprünge 31 auf, die formschlüssig in die Spindelnut 20 eingreifen. Dadurch ist in einfacher Weise der Rückführkörper 29 gegen seitliche Verschiebung gesichert. An seiner der Spindel 21 abgekehrten Seite weist der die Einzelgangumlenkung bewirkende Rückführkörper 29 Überführungskanäle 32 in Form von Nuten 33 auf, wobei die Nuten 33 gegen die Wand 34 der Ausnehmung 28 im Mutternkörper 23 gerichtet sind. Die Nuten 33 sind somit in einfacher Weise einformbar und bilden zusammen mit der Wand 34 der Ausnehmung 28 im Mutternkörper 23 den Überführungskanal 32. Die rippenförmigen Vorsprünge 31 bilden dabei in Verbindung mit den Nuten 33 Zungen, mit denen ein Herausheben der Kugeln aus dem jeweiligen Kugellaufkanal bewirkt wird.

Die die Überführungskanäle 32 bildenden Nuten 33 werden von die Nuten 33 zwischen sich bildenden rippenförmigen Vorsprüngen 35 geschaffen, die mit ihren freien Flächen 36 gegen die Wand 34 der Ausnehmung 28 im Mutternkörper 23 anliegen. Die von den Nuten 33 gebildeten Überführungskanäle 32 verbinden jeweils die benachbarten Enden eines Ganges des schraubengangförmigen Kugellaufkanals 25 miteinander.

Der für die Überführung der Kugeln 24 vom Rückführkörper 29 gebildete Überführungskanal 32 weist eine den Durchmesser der Kugeln 24 übersteigende lichte Weite auf. Die Kugeln 24 werden somit im Überführungskanal 32 von den nachfolgenden, aus dem Kugellaufkanal 25 austretenden Kugeln 24 zum Anfang des Kugellaufkanals 25 transportiert. Die Transportrichtung der Kugeln 24 wechselt dabei mit der Drehrichtung der Spindel 21 im Mutternkörper 23.

Am Eingang zum Kugellaufkanal, der eine kleinere lichte Weite aufweist als der Durchmesser der Kugeln 24, bildet der von der Ausnehmung 28 für den Rückführkörper 29 gebildete Beginn der schraubengangförmigen Mutternut 22 eine Kante, die gegenüber der den Überführungskanal 32 bildenden Nut 33 im Rückführkörper 29 vorsteht. Diese Kante 37 ist in der Fig. 11 mit strichpunktierter Linie dargestellt. Da die Kugeln 24 im Kugellaufkanal 25, wie insbesondere aus der Fig. 12 ersichtlich, mit einem kleinen Übermaß zwischen den Seitenflanken 26 und 27 der schraubengangförmigen Nuten 20 und 22 von Spindel 21 und Mutternkörper 23 eingeklemmt werden – der unbelastete Zustand der Kugeln 24 ist dabei mit strichpunktierten Linien angedeutet –, können die Kugeln 24 nicht ruckfrei in den Kugellaufkanal 25 einlaufen, da wegen der Kante 27 die Kugeln auf kürzestem Weg zusammengepreßt werden müssen. Dabei müssen die Kugeln 24 jeweils mit den nachfolgenden Kugeln 24 in das vordere Ende des Kugellaufkanals 25 eingedrückt werden. Beim bestimmungsgemäßen Gebrauch des Kugelgewindetriebes gibt es somit jedesmal einen kleinen Ruck, wenn die nächste Kugel 24 in den Kugellaufkanal 25 eingedrückt wird. Eine feinstufige Verstellung des Kugelgewindetriebes ist somit nicht möglich.

Bei den bekannten Kugelgewindetrieben wurde daher das vordere Ende der Mutternut 22 konisch erweitert. Dabei wurde die lichte Weite der Mutternut 22 der lichten Weite der Nut 23 im Rückführkörper 29 angepaßt. Die Anpassung erfolgte üblicherweise in zeitraubender Handarbeit, wobei insbesondere darauf zu achten war, daß die Seitenflanken 27 der Mutternut 22 mit den Seitenflanken der Nut 33 im Rückführkörpe 29 fluchten, um vorspringende Kanten zu vermeiden, die ein Haken der Kugeln 24 hervorrufen könnten. Das Anbringen der trichterförmigen Erweiterungen am vorderen Ende und am hinteren Ende der Mutternut 22 ist zeitaufwendig und teuer und gewährleistet durch ungenaue Handarbeit keinen einwandfreien Lauf der Kugeln 24, obwohl versucht wurde, daß die konische Einlaufschräge 38 mit einem Einlaufwinkel versehen ist, der maximal dem Grenzeinlaufwinkel entspricht. Unter Grenzeinlaufwinkel ist dabei der größtwirksame Einlaufwinkel der Einlaufbahnen zweier Körper zu verstehen, die im konstanten Abstand zueinander gegensinnig bewegt werden und dabei einen Wälzkörper mit den Einlaufbahnen ohne zusätzliche Kraft von außen in Richtung zunehmender Stauchung einlaufen lassen.

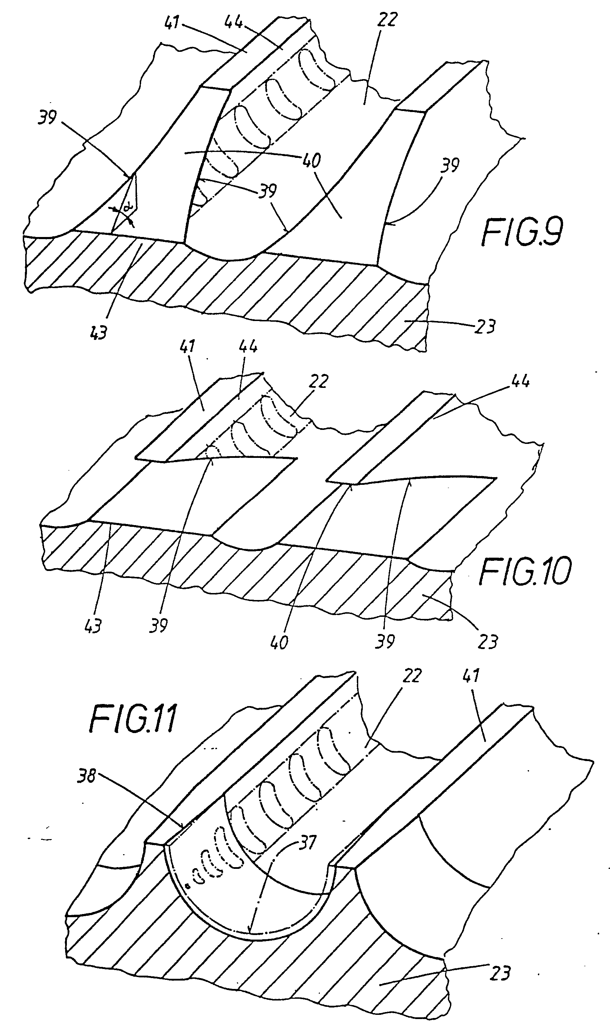

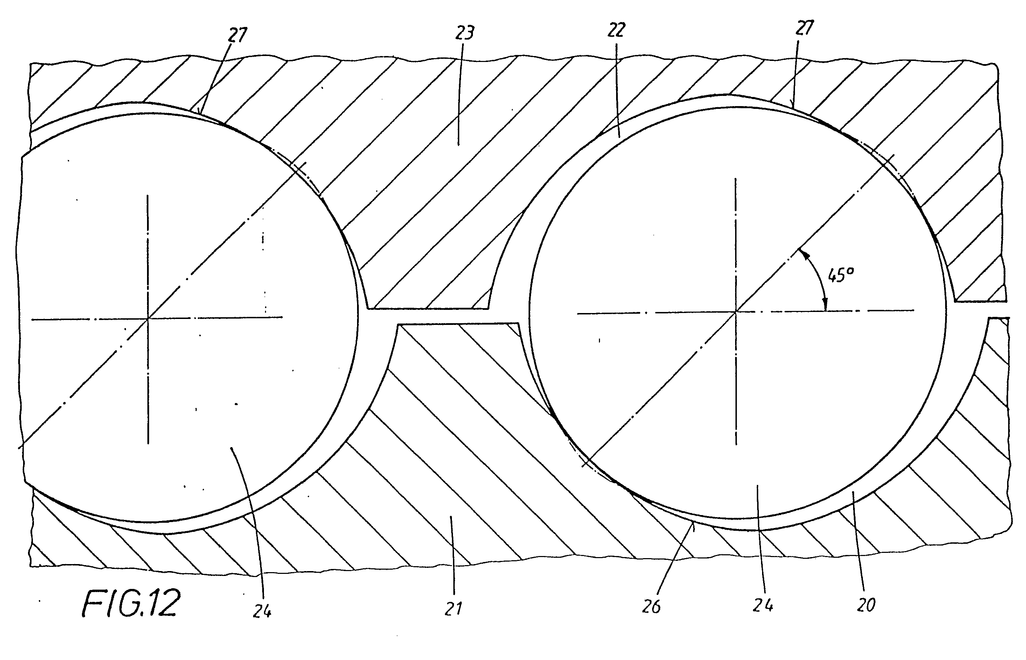

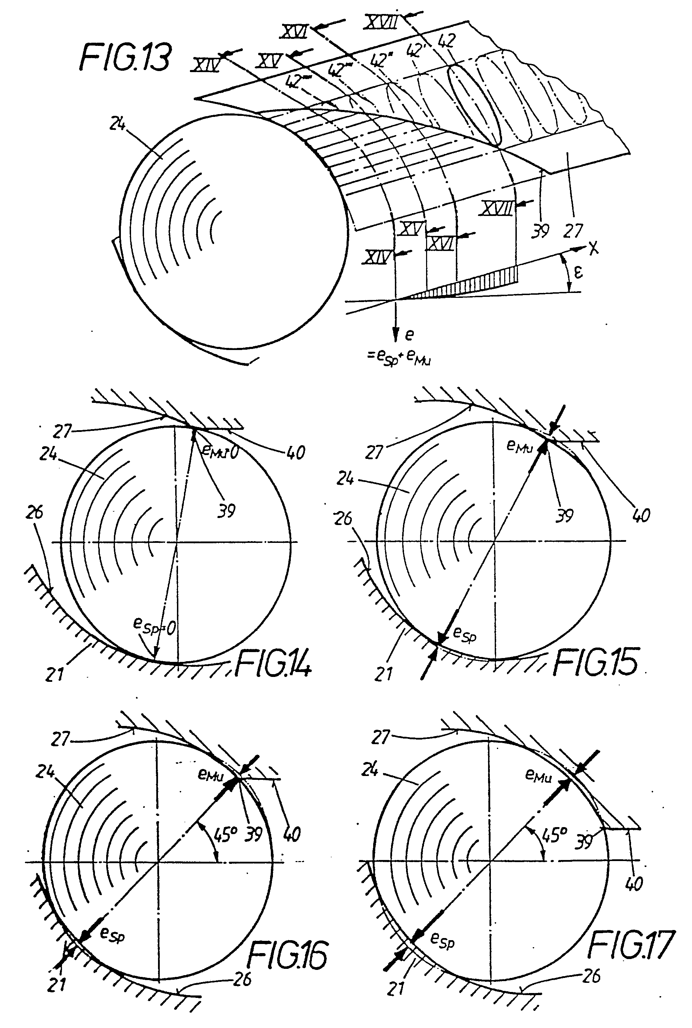

Beim Anmeldungsgegenstand ist die Einlaufschräge 38 von einer in einfacher Weise maschinell herzustellenden Einlaufkante 39 gebildet. Die an der Nutenstirn, am Beginn der zu nutzenden Seitenflanke 27 der Mutternut 22 gebildete Einlaufkante 39 verläuft unter einem Winkel geneigt zur Kugellaufrichtung und bildet allein die zum Stauchzustand der Kugeln führende Deformationsstrecke für die Kugeln 24 in Verbindung mit der zugehörigen Seitenflanke 26 der Spindelnut 20. Insbesondere aus den Fig. 9 und 10 ist dabei ersichtlich, daß zur Bildung der Einlaufkante 39 die von der im Mutternkörper 23 für den Rückführkörper 29 vorgesehene Ausnehmung 28 gebildeten Stirnflächen 40 der zwischen den schraubengangförmigen Mutternuten 22 stehenden Rippen 41 mit einem Winkel Alpha geneigt zur Kugellaufrichtung angeordnet sind. Wie insbesondere aus den Fig. 13 bis 17 ersichtlich, bildet die von der geneigt zur Kugellaufrichtung verlaufenden Stirnfläche 40 der zwischen den schraubengangförmigen Mutternuten 22 stehende Rippe 41 und der zur Anlage an die Kugeln 24 kommende, einen größeren Radius als die Kugeln 24 aufweisende Seitenflanke 27 der Rippe 41 gebildete Einlaufkante 39 eine räumliche Kurve in bezug auf die Kugellaufbahn und schließt zur Kugellaufrichtig einen räumlichen Winkel ein, dessen maximaler Steigungswinkel höchstens dem Grenzeinlaufwinkel entspricht. Um ein sanftes, selbständiges Einlaufen der Kugeln 24 im Kugellaufkanal 25 zu erzielen, wird somit in einfacher Weise von der größeren Wölbung der Seitenflanke 27 der schraubengangförmigen Mutternut 22 gegenüber dem Durchmesser der Kugeln 24 Gebrauch gemacht. Um einen entsprechenden Steigungswinkel an der Einlaufkante 39 zu erzielen, kann bei einem Kugelgewindetrieb mit Kugeln, die einen Radius von 3 mm aufweisen, der Radius der anliegenden Seitenflanke 27 3,3 mm und der Winkel Alpha der Stirnflächen 40 der zwischen den Mutternuten 22 stehenden Rippen 41 etwa 30° betragen.

Durch den größeren Radius der Seitenflanke 27 der schraubengangförmigen Mutternut 22 gegenüber dem Radius der Kugel liegt die Kugel 24 durch die elastische Zusammenpressung mit einer ellipsenförmigen Fläche 42 gegen die Seitenflanke 27 der schraubengangförmigen Mutternut 22 an. Diese ellipsenförmigen Flächen 42, 42', 42'', 42''', 42'''' sind in den Fig. 9, 10, 11 und 13 mit strichpunktierten Linien dargestellt. Dabei sind in den Figuren jeweils mehrere solcher elliptischen Flächen angedeutet, die jeweils unterschiedliche Stellungen der Kugel 24 während des Kugellaufes darstellen. Eine der elliptischen Flächen 42 ist dabei in der Fig. 13 mit voll ausgezogenen Linien dargestellt und zeigt die Zwischenstellung der Kugel 24, nachdem sie vollständig in den Kugellaufkanal 25 eingelaufen ist. Der entsprechende Schnitt durch den Kugellaufkanal 25 ist in der Fig. 17 wiedergegeben.

Die links davor dargestellte ellipsenförmige Fläche 42' ist durch die schematisch dargestellte Einlaufkante 39 etwas verkleinert. Die nächste links davon liegende ellipsenförmige Fläche 42'' ist durch die schematisch dargestellte Einlaufkante 39 etwa halbiert und zeigt, entsprechend der Fig. 16, etwa die Stellung an, an der die Einlaufkante 39 etwa die Längsmittellinie der Abrollbahn der ellipsenförmigen Flächen 42 auf der Seitenflanke 27 der schraubengangförmigen Mutternut 22 schneidet. Die ellipsenförmige Fläche 42''' zeigt, daß die Kugel 24 in Verbindung mit der Einlaufkante 39 nur noch zu einem kleinen Teil gegen die Seitenflanke 27 der schraubengangförmigen Nut 22 des Mutternkörpers 23 zur Anlage kommt. Dies ist in der Fig. 15 näher dargestellt. Die Fig. 14 zeigt schließlich die Stellung, an der von der ellipsenförmigen Fläche 42 nichts mehr übrig bleibt und die Einlaufkante 39 nur punktförmig gegen die Kugel 24 zur Anlage kommt. Bis zu dieser Stellung kann die Kugel 24 frei durch den Überführungskanal 32 zum Kugellaufkanal 25 laufen. Durch die Berührung der Einlaufkante 39 mit der Kugel 24 wird beim weiteren Drehen der Spindel 21 gegenüber dem Mutternkörper 23 die Kugel in den Kugellaufkanal sanft und ruckfrei eingerollt, da durch die Einlaufkante 39 die Seitenflanke 27 der schraubengangförmigen Mutternut 22 und damit die ellipsenförmige Anlagefläche immer größer werden und somit tiefer eindringend mit der Kugel 24 in Berührung tritt. Beim Erreichen der ellipsenförmigen Fläche 42'' ist dann die engste lichte Weite zwischen den beiden Seitenflanken 26 und 27 der schraubengangförmigen Nuten 20 und 22 von Spindel 21 und Mutternkörper 23 erreicht.

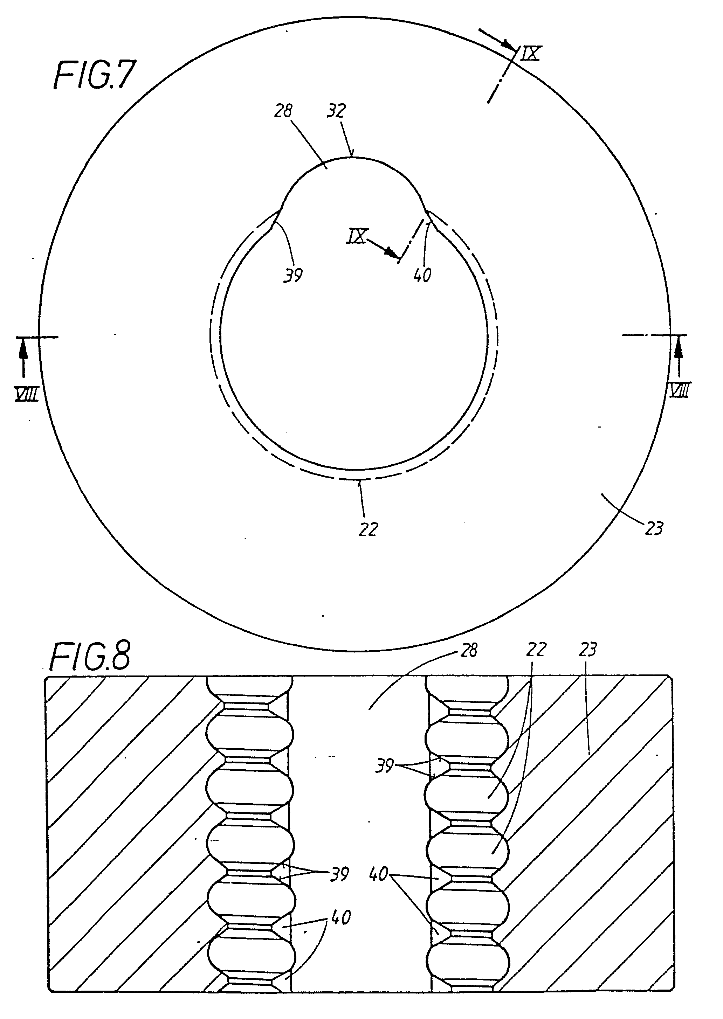

Wie insbesondere aus den Fig. 7 und 8 ersichtlich, sind die von den Stirnflächen 40 der Rippen 41 gebildeten Einlaufkanten 39 zueinander in Achsrichtung fluchtend angeordnet. Dadurch können in einfacher Weise die Stirnflächen 40 gemeinsam und im gleichen Arbeitsgang mit der Einbringung der Ausnehmung 28 bearbeitet werden.

Die Stirnflächen 40 der Rippen 41 verlaufen an beiden Längsseiten der die gesamte Breite des Mutternkörpers 23 erfassenden Ausnehmung 28

für den Rückführkörper 29 geneigt zur Kugellaufrichtung. Dadurch sind in einfacher Weise an beiden Seiten der Ausnehmung die Stirnflächen schräg angeordnet, so daß Einlaufkanten 39 für beide Drehrichtungen der Spindel 21 im Mutternkörper 23 gebildet werden.

Bei dem in Fig. 9 dargestellten Ausführungsbeispiel steigen die geneigt zur Kugellaufrichtung verlaufenden Stirnflächen 40 der Rippen 41 in Einlaufrichtung vom Rippenfuß 43 zur Rippenspitze 44 kontinuierlich an. Entsprechend dem Ausführungsbeispiel nach Fig. 10 kann die Neigung der Einlaufkante 39 auch umgekehrt werden, so daß die geneigt zur Kugellaufrichtung verlaufenden Stirnflächen 40 der Rippen 41 in Einlaufrichtung von der Rippenspitze 44 zum Rippenfuß 43 kontinuierlich abfallen. In beiden Fällen wird ein sanfter, ruckfreier Einlauf der Kugeln 24 in den Kugellaufkanal gewährleistet.

Wie bereits erwähnt, sind die dargestellten Ausführungsbeispiele lediglich beispielsweise Verwirklichungen der Erfindung und diese nicht darauf beschränkt. Vielmehr sind noch mancherlei andere Ausführungen und Abänderungen möglich. So könnte die geneigt zur Kugellaufrichtung verlaufende Stirnfläche statt eben auch bogenförmig od. dgl. ausgebildet werden. Ebenso kann die Einlaufkante 39 auch in anderer Weise geneigt zur Kugellaufrichtung angeordnet werden. Ferner kann die Einlaufkante 39 auch von einer die Seitenflanke 27 schneidenden Fläche gebildet sein, die nicht in Achsrichtung fluchtend zum Mutternkörper 23 verläuft. Schließlich können die die Nuten 33 zwischen sich bildenden rippenförmigen Vorsprünge 35 des Rückführkörpers 29 im mittleren Bereich etwas abgeflacht sein, um eine zu dünne Ausbildung der rippenförmigen Vorsprünge, insbesondere bei S-förmiger Ausbildung der Nuten, zu verhindern, da diese in diesem Bereich durch die Abflachung einfach entfernt sind.

**Patentansprüche**

1. Kugelgewindetrieb mit einer eine schraubengangförmige Spindelnut (20) aufweisenden Spindel (21) und einem ebenfalls eine schraubengangförmige Mutternut (22) aufweisenden Mutternkörper (23), wobei die beiden Nuten sich zu einem eine Anzahl von endlos umlaufenden Kugeln (24) aufnehmenden schraubengangförmigen Kugellaufkanal (25) ergänzen, in dem sich die Kugeln abwälzen und dabei gegen die eine, einen größeren Radius als die Kugeln aufweisende Seitenflanke (26) der Spindelnut und gegen die gegenüberliegende, einen größeren Radius als die Kugeln aufweisende Seitenflanke (27) der Mutternut kraftschlüssig anliegen, wobei dem Kugellaufkanal mindestens ein einen Überführungskanal (32) aufweisenden Rückführkörper (29) zum Überführen der am Ende des Kugellaufkanals ankommenden Kugeln über eine die Spindelnut begrenzende Rippe (30) hinweg zum Anfang des mindestens einmal umlaufenden Kugellaufkanals zugeordnet ist, wobei der Überführungskanal (32) eine den Durchmesser der Kugeln (24) übersteigende lichte Weite aufweist und wobei die Mutternut dort, wo die Kugeln wieder in den Kugellaufkanal gelangen, mit einer Einlaufschräge (38) mit einem Einlaufwinkel versehen ist, der maximal dem Grenzeinlaufwinkel entspricht, dadurch gekennzeichnet, daß die Einlaufschräge (38) von einer Einlaufkante (39) gebildet ist, die an der Nutenstirn, am Beginn der zu nutzenden Seitenflanke (27) der Mutternut (22) angebracht ist, daß die Einlaufkante (39) unter einem Winkel geneigt zur Kugellaufrichtung verläuft und allein die zum Stauchzustand der Kugeln (24) führende Deformationsstrecke für die Kugeln (24) in Verbindung mit der zugehörigen Seitenflanke (26) der Spindelnut (20) bildet.

2. Kugelgewindetrieb nach Anspruch 1, dadurch gekennzeichnet, daß im Mutternkörper (23) zur Aufnahme des Rückführkörpers (29) eine Ausnehmung (28) vorgesehen ist, durch die zur Bildung der Einlaufkante (39) Stirnflächen (40) an zwischen den Mutternuten (22) stehenden Rippen (41) gebildet und mit einem Winkel Alpha geneigt zur Kugellaufrichtung angeordnet sind.

3. Kugelgewindetrieb nach Anspruch 1 oder 2, dadurch gekennzeichnet, daß die von der Stirnfläche (40) der Rippe (41) und der zur Anlage an die Kugeln (24) kommende Seitenflanke (27) gebildete Einlaufkante (39) eine räumliche Kurve in bezug auf die Kugellaufbahn bildet und zur Kugellaufrichtung einen räumlichen Winkel einschließt, dessen Maximalwert höchstens dem Grenzeinlaufwinkel entspricht.

4. Kugelgewindetrieb nach einem der Ansprüche 2 bis 3, dadurch gekennzeichnet, daß die Ausnehmung (28) die gesamte Breite des Mutternkörpers (23) erfaßt und alle dadurch gebildeten Stirnflächen (40) an den Rippen (41) geneigt zur Kugellaufrichtung verlaufen.

5. Kugelgewindetrieb nach einem der Ansprüche 2 bis 4, dadurch gekennzeichnet, daß die von den Stirnflächen (40) der Rippen (41) gebildeten Einlaufkanten (39) zueinander in Achsrichtung fluchtend angeordnet sind.

6. Kugelgewindetrieb nach einem der Ansprüche 2 bis 5, dadurch gekennzeichnet, daß die Stirnflächen (40) der Rippen (41) an beiden Längsseiten der die gesamte Breite des Mutternkörpers (23) erfassenden Ausnehmung (28) für den Rückführkörper (29) geneigt zur Kugellaufrichtung verlaufen.

7. Kugelgewindetrieb nach einem der Ansprüche 2 bis 6, dadurch gekennzeichnet, daß die Stirnflächen (40) der Rippen (41) in Einlaufrichtung vom Rippenfuß (43) zur Rippenspitze (44) kontinuierlich ansteigen.

8. Kugelgewindetrieb nach einem der Ansprüche 2 bis 6, dadurch gekennzeichnet, daß die Stirnflächen (40) der Rippen (41) in Einlaufrichtung von der Rippenspitze (44) zum Rippenfuß (43) kontinuierlich abfallen.

9. Kugelgewindetrieb nach einem der Ansprüche 2 bis 8, dadurch gekennzeichnet, daß mit dem die gesamte Breite des Mutternkörpers (23) erfassenden Rückführkörper (29) eine Einzelgangumlenkung erfolgt, wobei jeweils am Anfang und Ende der Kugellaufkanäle (25) die Einlaufkanten (39) vorgesehen sind.

10. Kugelgewindetrieb insbesondere nach einem der Ansprüche 1 bis 9, dadurch gekennzeichnet, daß der Rückführkörper (29) einen etwa halbkreisförmigen Querschnitt aufweist und in der einen entsprechenden Querschnitt aufweisenden, die gesamte Breite des Mutternkörpers (23) erfassenden Ausnehmung (28) eingesetzt ist.

11. Kugelgewindetrieb nach Anspruch 10, dadurch gekennzeichnet, daß der Rückführkörper (29) an seiner der Spindel (21) zugekehrten Seite rippenförmige Vorsprünge (31) aufweist, die formschlüssig in die Spindelnut (20) eingreifen.

12. Kugelgewindetrieb nach Anspruch 10 oder 11, dadurch gekennzeichnet, daß der Rückführkörper (29) an seiner der Spindel (21) abgekehrten Seite die Überführungskanäle (32) in Form von Nuten (33) aufweist, die gegen die Wand (34) der Ausnehmung (28) im Mutternkörper (23) gerichtet sind.

13. Kugelgewindetrieb nach Anspruch 12, dadurch gekennzeichnet, daß zwischen den Nuten (33) rippenförmige Vorsprünge (35) gebildet sind, die mit ihren freien Flächen (36) gegen die Wand (34) der Ausnehmung (28) im Mutternkörper (23) anliegen.

14. Kugelgewindetrieb nach einem der Ansprüche 12 bis 13, dadurch gekennzeichnet, daß die von den Nuten (33) gebildeten Überführungskanäle (32) jeweils die benachbarten Enden eines Ganges des Kugellaufkanals (25) miteinander verbinden.

15. Kugelgewindetrieb nach Anspruch 13, dadurch gekennzeichnet, daß die rippenförmigen Vorsprünge (35) im mittleren Bereich etwas abgeflacht sind.

**Claims**

1. A ball screw mechanism having a spindle (21) which exhibits a spindle groove (20) in the form of a screw thread and a nut body (23) which likewise exhibits a nut groove (22) in the form of a screw thread, the two grooves adding up to a ballrace channel (25) in the form of a screw thread which receives a number of endlessly circulating balls (24) and in which the balls roll and in doing so rest hard up against the one sideflank (26) of the spindle groove, which exhibits a greater radius than the balls, and against the opposite sideflank (27) of the nut groove, which exhibits a greater radius than the balls, there being associated with the ballrace channel at least one return body (29) which exhibits a transfer channel (32) for leading the balls arriving at the end of the ballrace channel over a rib (30) bounding the spindle groove to the start of the ballrace channel which runs round at least once, the transfer channel (32) exhibiting an inside width exceeding the diameter of the balls (24) and the nut groove being·provided where the balls arrive back in the ballrace channel with an entry bevel (38) having an entry angle which corresponds at a maximum with the limiting entry angle, characterized in that the entry bevel (38) is formed by an entry edge (39) which is placed at the front of the groove at the start of that sideflank (27) of the nut groove (22) which is to be used, that the entry edge (39) runs at an angle inclined to the direction of the ballrace and alone in combination with the associated sideflank (26) of the spindle groove (20) forms the deformation section for the balls (24) leading to the compressed state of the balls (24).

2. A ball screw mechanism as in Claim 1, characterized in that in the nut body (23) for the reception of the return body (29) a recess (28) is provided by which for the formation of the entry edge (39) endfaces (40) are formed on ribs (41) standing between the nut grooves (22) and are arranged at an angle alpha inclined to the direction of the ballrace.

3. A ball screw mechanism as in Claim 1 or 2, characterized in that the entry edge (39) which is formed by the endface (40) of the rib (41) and the sideflank (27) coming into contact with the balls (24), forms a spatial curve with respect to the ballrace and includes with respect to the direction of the ballrace a solid angle the maximum value of which corresponds at most with the limiting entry angle.

4. A ball screw mechanism as in one of the Claims 2 to 3, characterized in that the recess (28) occupies the whole width of the nut body (23) and all of the endfaces (40) thereby formed on the ribs (41) run inclined to the direction of the ballrace.

5. A ball screw mechanism as in one of the Claims 2 to 4, characterized in that the entry edges (39) formed by the endfaces (40) of the ribs (41) are arranged in line with one another in the axial direction.

6. A ball screw mechanism as in one of the Claims 2 to 5, characterized in that the endfaces (40) of the ribs (41) on both longitudinal sides of the recess (28) for the return body (29), which occupies the whole width of the nut body (23), run inclined to the direction of the ballrace.

7. A ball screw mechanism as in one of the Claims 2 to 6, characterized in that the endfaces (40) of the ribs (41) rise continuously in the entry direction from the rib foot (43) to the rib apex (44).

8. A ball screw mechanism as in one of the Claims 2 to 6, characterized in that the endfaces (40) of the ribs (41) fall continuously in the entry direction from the rib apex (44) to the rib foot (43).

9. A ball screw mechanism as in one of the Claims 2 to 8, characterized in that by the return body (29) occupying the whole width of the nut body (23) a single-turn return is effected, the entry edges (39) being provided respectively at the start and end of the ballrace channels (25).

10. A ball screw mechanism especially as in one of the Claims 1 to 9, characterized in that the return body (29) exhibits an approximately semicircular cross-section and is inserted in the recess (28) which exhibits a corresponding cross-section and occupies the whole width of the nut body (23).

11. A ball screw mechanism as in Claim 10, characterized in that the return body (29) exhibits on the side of it next the spindle (21) projections (31) in the form of ribs which engage with a close fit in the spindle groove (20).

12. A ball screw mechanism as in Claim 10 or 11, characterized in that the return body (29) exhibits on the side of it remote from the spindle (21) the transfer channels (32) in the form of grooves (33) which are directed towards the wall (34) of the recess (28) in the nut body (23).

13. A ball screw mechanism as in Claim 12, characterized in that between the grooves (33) projections (35) in the form of ribs are formed, which rest by their free areas (36) against the wall (34) of the recess (28) in the nut body (23).

14. A ball screw mechanism as in one of the Claims 12 to 13, characterized in that the transfer channels (32) formed by the grooves (33) connect together in each case the adjacent ends of one turn of the ballrace channel (25).

15. A ball screw mechanism as in Claim 13, characterized in that the projections (35) in the form of ribs are flattened somewhat in the central region.

**Revendications**

1. Vis à billes comprenant une vis sans fin (21) munie d'une gorge hélicoïdale (20) et un bloc-écrou (23) muni aussi d'une gorge hélicoïdale (22), les deux gorges se complétant pour former un canal hélicoïdal de circulation (25) des billes dans lequel sont logées un certain nombre de billes (24) se déplaçant en circuit fermé et dans lequel ces billes roulent et s'appuient, sous effort, sur l'un des flancs latéraux (26), possédant un rayon plus grand que celui des billes, de la gorge de la vis sans fin, et sur le flanc latéral opposé (27), possédant un rayon plus grand que celui des billes, de la gorge de l'écrou, tandis qu'il est associé, à ce canal de circulation des billes, au moins un bloc de retour (29) comportant un canal de transfert (32) et servant à ramener à l'entrée du canal de circulation, qui fait au moins un tour, les billes arrivant à la fin de ce canal, par l'intermédiaire d'une nervure (30) délimitant la gorge de la vis sans fin, que le canal de transfert (32) a une largeur libre supérieure au diamètre des billes (24) et que, à l'endroit où les billes reviennent dans le canal de circulation, la gorge de l'écrou est pourvue d'une partie oblique d'entrée (38) présentant un angle d'entrée qui correspond au maximum à l'angle limite d'entrée, caractérisée en ce que la partie oblique d'entrée (38) est formée par une arête d'entrée (39) qui est située sur la partie frontale de la gorge (22) de l'écrou, au début de son flanc latéral (27) à utiliser, et en ce que l'arête d'entrée (39) est inclinée d'un certain angle par rapport à la direction de déplacement des billes et, en coopération avec le flanc latéral associé (26) de la gorge (20) de la vis sans fin, constitue seule la ligne de déformation prévue pour les billes (24) et entraînant l'état de mise en compression de celles-ci.

2. Vis à billes suivant la revendication 1, caractérisée en ce qu'il est prévu, dans le bloc-écrou (23) et pour loger le bloc de retour (29), une cavité (28) par laquelle, en vue de former l'arête d'entrée (39), des surfaces frontales (40) sont formées sur des nervures (41) se dressant entre les gorges (22) de l'écrou, en étant inclinées d'un angle alpha par rapport à la direction de déplacement des billes.

3. Vis à billes suivant la revendication 1 ou 2, caractérisée en ce que l'arête d'entrée (39), formée par la surface frontale (40) de la nervure (41) et par le flanc latéral (27) venant en appui sur les billes (24), constitue une courbe gauche par rapport au trajet de déplacement des billes et forme, avec la direction de déplacement des billes, un angle solide dont la valeur maximale correspond au maximum à l'angle limite d'entrée.

4. Vis à billes suivant l'une des revendications 2 et 3, caractérisée en ce que la cavité (28) s'étend sur toute la largeur du bloc-écrou (23) et en ce que toutes les surfaces frontales (40) ainsi formées sur les nervures (41) sont inclinées par rapport à la direction de déplacement des billes.

5. Vis à billes suivant l'une des revendications 2 à 4, caractérisée en ce que les arêtes d'entrée (39) formées par les surfaces frontales (40) des nervures (41) sont alignées entre elles en direction axiale.

6. Vis à billes suivant l'une des revendications 2 à 5, caractérisée en ce que les surfaces frontales (40) des nervures (41) sont inclinées par rapport à la direction de déplacement des billes, sur les deux côtés longitudinaux de la cavité (28) prévue pour le corps de retour (29) et s'étendant sur toute la largeur du bloc-écrou (23).

7. Vis à billes suivant l'une des revendications 2 à 6, caractérisée en ce que les surfaces frontales (40) des nervures (41) s'élèvent de façon continue suivant la direction d'entrée, du pied (43) des nervures à leur sommet (44).

8. Vis à billes suivant l'une des revendications 2 à 6, caractérisée en ce que les surfaces frontales (40) des nervures (41) s'abaissent de façon continue suivant la direction d'entrée, du sommet (44) des nervures à leur pied (43).

9. Vis à billes suivant l'une des revendications 2 à 8, caractérisée en ce que le bloc de retour (29) s'étendant sur toute la largeur du bloc-écrou (23) assure une déviation sur une spire unique, les arêtes d'entrée (39) étant prévues au début et à la fin de chacun des canaux de circulation (25) des billes.

10. Vis à billes plus particulièrement suivant l'une des revendications 1 à 9, caractérisée en ce que le bloc de retour (29) a une section transversale sensiblement semi-circulaire et se place dans la cavité (28) qui s'étend sur toute la largeur du bloc-écrou (23) et qui possède une section transversale correspondante.

11. Vis à billes suivant la revendication 10, caractérisée en ce que, sur son côté tourné vers la vis sans fin (21), le bloc de retour (29) comporte des saillies (31) en forme de nervures qui s'emboîtent dans la gorge (20) la vis sans fin grâce à la complémentarité de leurs formes.

12. Vis à billes suivant la revendication 10 ou 11, caractérisée en ce que, sur son côté opposé à la vis sans fin (21), le bloc de retour (29) présente les canaux de transfert (32) sous la forme de gorges (33) qui sont tournées vers la paroi (34) de la cavité (28) du bloc-écrou (23).

13. Vis à billes suivant la revendication 12, caractérisée en ce qu'il est formé, entre les gorges (33), des saillies (35) en forme de nervures qui s'appuient par leurs surfaces libres (36) sur la paroi (34) de la cavité (28) du bloc-écrou (23).

14. Vis à billes suivant l'une des revendications 12 et 13, caractérisée en ce que chacun des canaux de transfert (32) formés par les gorges (33) relie entre elles les extrémités voisines d'une spire du canal de circulation (25) des billes.

15. Vis à billes suivant la revendication 13, caractérisée en ce que les saillies (35) en forme de nervures sont légèrement aplaties dans leur zone médiane.

# FIG.1

# FIG.2

FIG.3

FIG.4

FIG.5

FIG.6

*FIG.7*

*FIG.8*

FIG.9

FIG.10

FIG.11

FIG.12

FIG.13

FIG.14

FIG.15

FIG.16

FIG.17